# EUROPÄISCHE PATENTSCHRIFT

(11) **EP 0 846 547 B1**
(45) Veröffentlichungstag und Bekanntmachung des Hinweises auf die Patenterteilung: **12.03.2003**
(21) Anmeldenummer: 97121093.5
(22) Anmeldetag: 01.12.1997
(51) Int. Cl.: B29C 53/08, A22C 13/00

(54) **Verfahren und Vorrichtung zum kontinuierlichen Kranzen von thermoplastischen, schrumpffähigen Schlauchhüllen**
Method and apparatus for continuously curving thermoplastic shrinkable tubular casings
Procédé et dispositif pour cintrer en continu une enveloppe tubulaire thermoplastique rétractable

(30) Priorität: 07.12.1996 DE 19650873
(43) Veröffentlichungstag der Anmeldung: 10.06.1998
(73) Patentinhaber: Kalle GmbH & Co. KG, 65203 Wiesbaden (DE)
(72) Erfinder: Auf der Heide, Dirk, 49594 Alfhausen (DE); Auf der Heide, Christian, 49080 Osnabrück (DE); Weinheimer, Alois, 55232 Alzey (DE); Uhlmann, Dieter, 65203 Wiesbaden (DE)
(74) Vertreter: Zounek, Nikolai, Dipl.-Ing.

(56) Entgegenhaltungen:
- DE-A- 2 501 287
- DE-A- 2 519 621
- DE-A- 3 013 989
- FR-A- 2 343 576

## Beschreibung

Die Erfindung betrifft ein Verfahren zum kontinuierlichen Kranzen von thermoplastischen, schrumpffähigen Schlauchhüllen durch Wärmebehandlung der Innenseite einer wendelförmig geführten Schlauchhülle in aufgeblasenem Zustand, wobei die Schlauchhülle abschnittsweise vor dem Einlaufen in ein Kranzwerkzeug mit Druckgas von geringem Überdruck gefüllt wird und eine Vorrichtung hierfür.

Gerade Schlauchhüllen, bei denen es sich im allgemeinen um ein- oder mehrschichtige Polymerhüllen handelt, deren Ausgangsmaterial biaxial verstreckt ist, werden als Wursthüllen verwendet. Durch Einfüllen von Wurstmasse in derartige Schlauchhüllen werden geradlinige, zylindrische Würste erhalten. Neben derartigen langgestreckten Würsten werden auch Kranzwürste oder Wurstringe hergestellt, deren Ausgangsmaterial gerade Schlauchhüllen sind, die in Kranzeinrichtungen oder Kranzwerkzeugen behandelt werden, um sogenannte Kranzhüllen zu erhalten. Das Kranzen beruht auf der Tatsache, daß die Schlauchhüllen schrumpffähig sind und bei einseitiger Wärmebehandlung der Innenseite von Schlauchhüllen ein Schrumpfen eintritt, wodurch die geradlinige Schlauchhülle gekrümmt wird.

Derartige Verfahren und Vorrichtungen zur Herstellung von schrumpffähigen Schlauchhüllen in Kranzform durch einseitige Wärmebehandlung in aufgeblasenem Zustand sind seit langem bekannt. So ist beispielsweise aus der DE-B-23 22 220 ein Verfahren bekannt, bei dem die Wärmebehandlung der Schlauchhülle in drei Phasen erfolgt, wobei die Innenseite der gewendelten Schlauchhülle zunächst auf eine Temperatur unterhalb, dann auf eine Temperatur oberhalb und schließlich wieder auf eine Temperatur unterhalb der unteren Grenze des Schrumpfauslösungstemperaturbereichs gebracht wird. Die Vorrichtung zur Ausführung dieses Verfahrens besteht aus einer teilweise beheizbaren, wenigstens einstückigen und im wesentlichen zylinderförmigen Walzenanordnung zur wendelförmigen Führung der schrumpffähigen thermoplastischen Schlauchhüllen, mit je einem vor und nach der Walzenanordnung angeordneten Quetschwalzenpaar, zwischen denen eine Gasblase in der Schlauchhülle eingeschlossen ist. Die Walzenanordnung weist Endbereiche zur Schlauchhüllenaufnahme bzw. zur Schlauchhüllenabgabe auf, die auf einer Temperatur unterhalb der Schrumpfauslösungstemperatur gehalten sind und einen dazwischenliegenden Bereich zur Wärmebehandlung der Schlauchhülle, der auf einer Temperatur im Schrumpfauslösungstemperaturbereich für die jeweiligen Schlauchhüllen gehalten ist. Die Walzenanordnung ist dabei mehrteilig ausgeführt und deren Einzelteile sind formschlüssig, jedoch lösbar miteinander verbunden. Die Schlauchhüllenführung besteht aus einer an der Walzenoberfläche angeordneten Wendel.

Aus der DE-A-30 31 944 sind ein Verfahren und eine Vorrichtung zum Krümmen von Schlauchhüllen bekannt. Bei dem Verfahren wird die Schlauchhülle während ihres Krümmungsweges einerseits einer Kontakt- und/oder Strahlungswärme ausgesetzt, andererseits einer Konvektionswärme, wobei die Wärmebehandlung durch Kontakt oder Strahlung länger aufrechterhalten wird als die Behandlung mit Konvektionswärme. Die Schlauchhülle ist mit Gas oder Luft unmittelbar vor oder nach der Wärmebehandlung gefüllt und wird wendelförmig über einen Dom gewickelt, wobei die aufeinanderfolgenden Windungen einander anliegen und die Kontakt- bzw. Strahlungswärme in dem Raum wirkt, der von den wendelförmigen Windungen umschlossen ist. Die Vorrichtung weist einen drehbaren, glatten, beheizten Dom, Festlegemittel zur Befestigung der zu krümmenden Schlauchhülle am Dorn und eine Vorrichtung zur Zuführung der Schlauchhülle auf. Diese Zuführvorrichtung umgibt zusammen mit einem Gehäuse den Dom, enthält eine Beheizungsvorrichtung und ist längs des Dorns verschiebbar. Eine Antriebsvorrichtung verschiebt die Zuführungsvorrichtung in wenigstens einer Richtung, wobei die Geschwindigkeit von der Anzahl der Windungen um den Dorn und von dem Durchmesser der Schlauchhülle abhängt, die den Dorn umwikkelt.

Die DE-C-23 14 767 beschreibt ein Verfahren zur Herstellung von eßbaren, kranzförmigen Wursthüllen durch Blasextrusion und schraubenförmige Abführung der aufgeblasenen extrudierten Hülle durch Ablage auf mit der Austrittgeschwindigkeit der Hülle aus der Extruderdüse umlaufende, fortlaufend hintereinander angeordnete Umkreisflächen. Gegebenenfalls wird gleichzeitig getrocknet, gehärtet bzw. gegerbt und/oder weichgemacht. Die aus eßbarem Material bestehende Hülle wird auf konische durchgehende Umkreisflächen abgelegt. Die Vorrichtung zur Durchführung des Verfahrens weist mehrere hintereinander angeordnete, angetriebene Tragelemente als Ablage für die extrudierte, aufgeblasene Hülle auf. Eine zur Schraubenachse schräg gestellte, verstellbare Abhebeeinrichtung hat die Gestalt einer Rolle für den Transport einer Hülle von einem Tragelement zum nächsten. Die einzelnen Tragelemente haben geschlossene konische Umkreisflächen und werden von einer zentralen, gemeinsamen Antriebswelle angetrieben. Der Konus der Tragelemente steigt in Transportrichtung der Hülle an und die Tragelemente weisen in Richtung der Schraubenachse verlaufende Vorsprünge bzw. Rippen auf.

Aus der DE-B-17 04 864 sind ein Verfahren und eine Vorrichtung zur kontinuierlichen Herstellung von endlosen, wendelförmig gekrümmten Kunststoffschläuchen bzw.- därmen durch Extrudieren einer heißen Kunststoffmasse aus einem in einem Blaskopf gelagerten Ringschlitz durch Ausweiten des noch plastischen Schlauches mittels einer dosierten, in das Schlauchinnere geführten Luftmenge und Zurückhalten dieser zugeführten Luftmenge im Schlauch mittels Abquetschwalzen bekannt, wobei der Schlauch über seinen Umfang unterschiedlich gekühlt wird. Der sich aufweitende Schlauch wird vor dem Erreichen seines endgültigen und größten Durchmessers asymmetrisch gekühlt und der sich krümmende Schlauch wird bis zur Abquetschstelle in einem Halbkreis geführt. Die Vorrichtung besteht aus einem Extruder mit Schnecke und einem mit einer Luftzuführung versehenen Blaskopf, der einen konzentrischen oder exzentrischen Ringschlitz aufweist, sowie aus Abquetschwalzen zum Abquetschen der Blasluft und aus Einrichtungen zum unterschiedlichen Kühlen des Schlauches in einzelnen Abschnitten. Hinter dem Blaskopf ist ein gegenüber der Achse des Schlauches geneigter Düsenring zum allseitigen Anblasen des Schlauches mit Kühlluft angeordnet. Der Düsenring besteht aus zwei in verschiedenen quer zur Achse des Schlauches verlaufenden Ebenen angeordneten und gegenseitig um 180° versetzten Halbringen.

Aus dem Dokument WO 95/21052 (PCT/JP 95/00158) ist ein Verfahren zur kontinuierlichen Herstellung von Kranzhüllen für Würste oder Schinken bekannt, bei dem eine thermoplastische zylindrische Schlauchhülle, die Gas enthält, aufgewickelt wird. Eine Einrichtung für das Wärmeschrumpfen weist eine Vielzahl von stiftähnlichen Rollen auf, die umfangsmäßig angeordnet sind und um ihre Achsen sich drehen, um die Schlauchhülle spiralförmig zu führen.

Bei den bekannten Verfahren und Vorrichtungen ist es erforderlich, die Schlauchhülle für das Kranzverfahren vorzubereiten, indem sie zunächst auf eine Wickettrommel aufgewickelt und mit Druckluft aufgeblasen wird. Die kontinuierliche Versorgung mit Druckluft erfolgt hierbei von der Wickeltrommel aus. Hierfür können bis zu 2000 m Schlauchhülle für das nachfolgende Kranzen vorbereitet werden. Die durch das Kranzen entstehende Kranzhülle wird längs- bzw. abschnittsweise portioniert und anschließend gerafft, wobei die einzelnen Kranzspiralen verarbeitet werden. Diese Portionierung in einzelne, mit einem bestimmten Luftdruck gefüllte Kranzspiralen macht das zuvor beschriebene vollständige Vorwickeln und Aufblasen der Schlauchhülle auf der Wickelrolle erforderlich. Dabei ist auch der apparative Aufwand für das Kranzen groß, da beispielsweise verschiedene Bereiche der Kranzeinrichtung unterschiedlich temperiert werden müssen.

Aufgabe der Erfindung ist es, ein Verfahren der eingangs beschriebenen Art sowie eine Vorrichtung für das Kranzen so zu verbessern, daß ein kontinuierliches Kranzen einer Schlauchhülle beliebiger Länge mit geringem apparativen Aufwand und bei gleichmäßiger Temperaturverteilung rings um die Schlauchhülle ermöglicht wird.

Diese Aufgabe wird verfahrensmäßig in der Weise gelöst, daß die Schlauchhülle über einen Großteil des Umfangs einer Wendel geführt, erwärmt und auf ihrem Transportweg entlang der Wendel auf der Innen- und Außenseite mit unterschiedlichen Geschwindigkeiten angetrieben und dadurch gekranzt wird und daß die für die Erwärmung der Innenseite der Schlauchhülle herangeführte Heißluft gleichmäßig über den Umfang der Schlauchhülle verteilt und eine vorgegebene Temperaturverteilung um die Schlauchhülle herum aufrechterhalten wird. In Ausführung dieses Verfahrens wird die Schlauchhülle auf einem Dreiviertelumfang der Wendel zu einer Kranzhülle geformt und durch die Führung der Schlauchhülle entlang der Wendel wird die Geometrie der Kranzhülle in bezug auf Kranzinnen- und -außendurchmesser sowie Kranzkaliber vorgegeben. Dabei ist der Gasüberdruck in der Schlauchhülle vor dem Einlaufen der Schlauchhülle in das Kranzwerkzeug durch Verkürzung oder Verlängerung eines aufgeblasenen Schlauchhüllenabschnittes einstellbar. In Ausgestaltung des Verfahrens wird die Kranzhülle nach dem Austritt aus dem Kranzwerkzeug abgequetscht und das Druckgas aus der Kranzhülle herausgequetscht. Die Kranzhülle wird dabei entlang der Kranzmittellinie flachgelegt und aufgewickelt.

Die Vorrichtung zum kontinuierlichen Kranzen von thermoplastischen, schrumpffähigen Schlauchhüllen mit einem teilweise beheizbaren wendelförmigen Kranzwerkzeug, durch das die Schlauchhüllen geführt sind und mit je einem vor und nach dem Kranzwerkzeug angeordneten Quetschwalzenpaar, zwischen denen eine Gasblase in der Schlauchhülle eingeschlossen ist, zeichnet sich dadurch aus, das das erste Quetschwalzenpaar entlang einer Einlaufstrecke der Schlauchhülle vor dem Kranzwerkzeug verstellbar ist, daß das Kranzwerkzeug wendelförmig ausgebildet ist und entlang der Wendelstrecke Führungsrollen angeordnet sind, die an der Außen- und Innenseite der ausgeblasenen Schlauchhülle anliegen, daß zumindest zwei Paare von Führungsrollen angetrieben sind und daß eine Einrichtung innerhalb des Innenumfangs der Wendel Heißluft erzeugt, die von der Innenseite her die Schlauchhülle erwärmt.

In Weiterbildung der Erfindung laufen die an der Außenseite der Schlauchhülle angetriebenen Führungsrollen mit höherer Geschwindigkeit um als die an der Innenseite der Schlauchhülle angetriebenen Führungsrollen.

Die weitere Ausgestaltung der Erfindung ergibt sich aus den Merkmalen der Patentansprüche 7 bis 15.

Mit der Erfindung werden die Vorteile erzielt, daß die Produktionsgeschwindigkeit wesentlich erhöht werden kann, da eine Schlauchhülle mit beliebiger Länge kontinuierlich direkt dem Kranzwerkzeug zugeführt und gekranzt werden kann, ohne das die Schlauchhülle vorab mit einem Gas aufgeblasen und auf eine Rolle aufgewickelt werden muß, daß die Schlauchhülle mit variabler Geschwindigkeit und sehr geringer Reibung durch das Kranzwerkzeug transportiert werden kann, da kein Vollkontakt der Schlauchhülle sondern nur ein auf kleine Bereiche begrenzter Kontakt mit den Führungsrollen besteht und daß die Temperaturverteilung während des Kranzens der Schlauchhülle mit geringem Regelaufwand konstant gehalten werden kann. Die Erfindung wird im folgenden anhand der Zeichnungen näher erläutert. Es zeigen:
- Fig. 1: eine Draufsicht auf eine schematisch dargestellte Vorrichtung zum Kranzen von Schlauchhüllen nach der Erfindung,
- Fig. 2: eine Seitenansicht einer Abwickelrolle der Vorrichtung nach Fig. 1,
- Fig. 3: eine Draufsicht auf ein schematisch dargestelltes Kranzwerkzeug der Vorrichtung nach Fig. 1,
- Fig. 4: eine Schnittansicht durch das Kranzwerkzeug nach Fig. 3,
- Fig. 5: eine Draufsicht auf eine Kranzhülle.

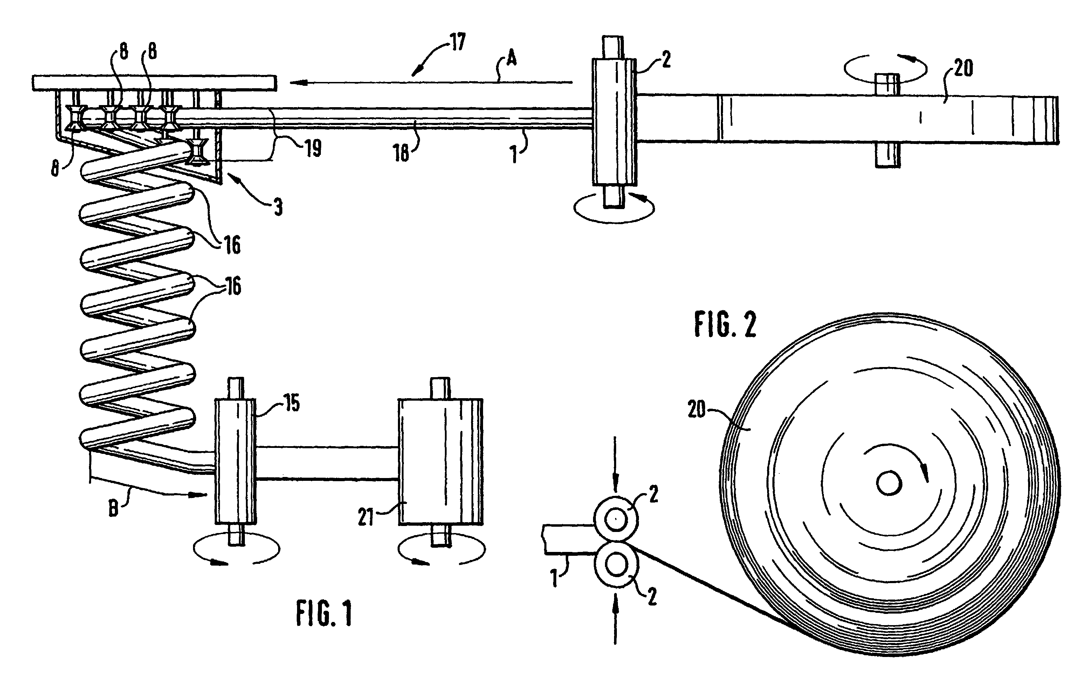

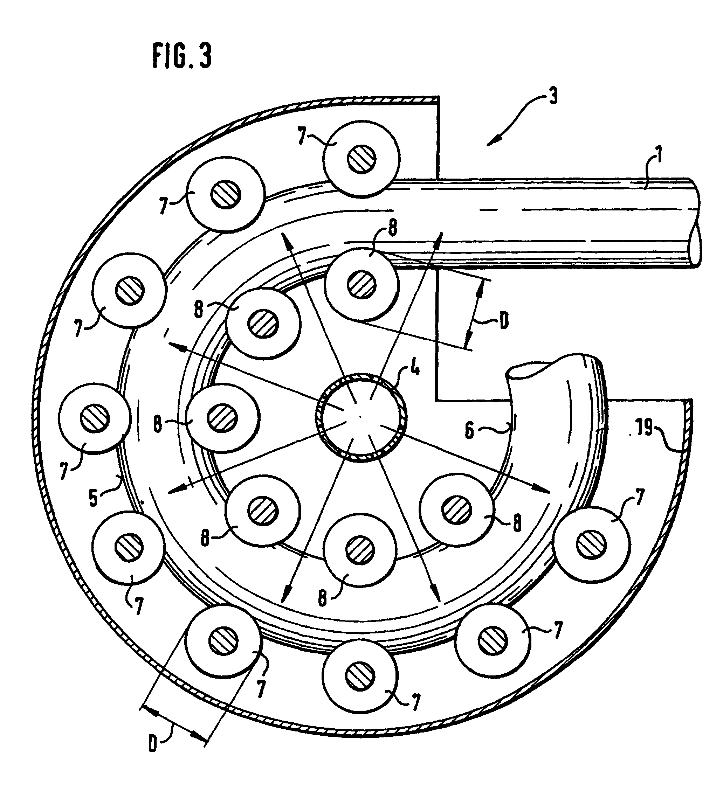

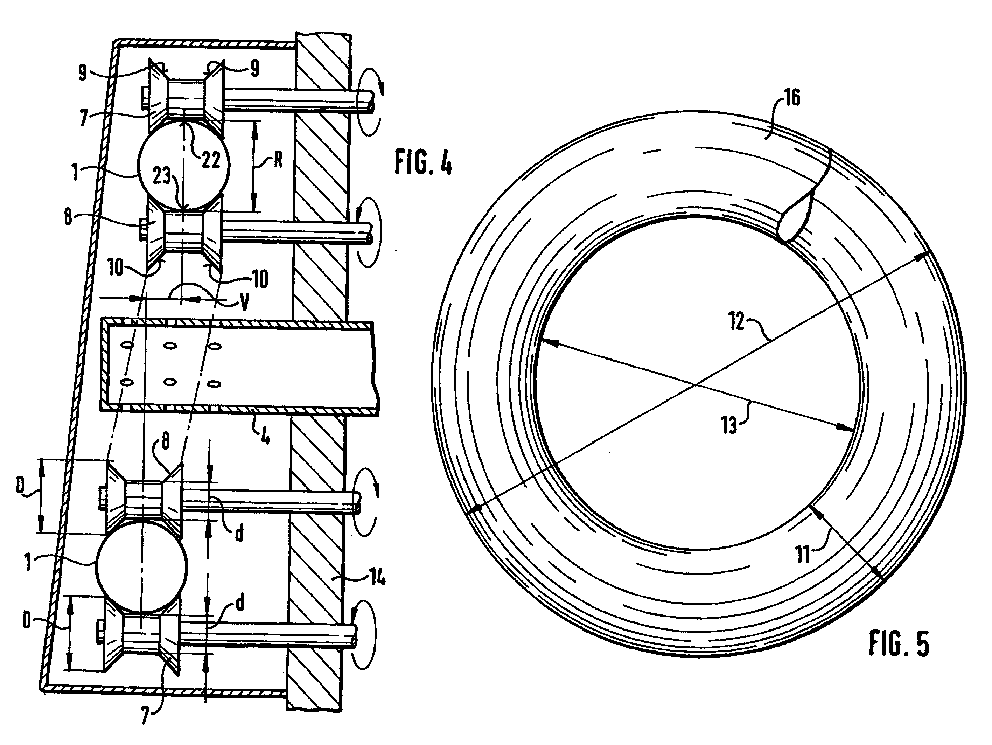

Eine in Fig. 1 schematisch dargestellte Vorrichtung 17 zum kontinuierlichen Kranzen von thermoplastischen, schrumpffähigen Schlauchhüllen besteht aus einer Abwickelrolle 20, einem ersten Quetschwalzenpaar 2, einem Kranzwerkzeug 3, einem zweiten Quetschwalzenpaar 15 und einer Aufwickelrolle 21. Eine Schlauchhülle 1 ist auf die Abwickelrolle 20 gewickelt, die im Uhrzeigersinn sich während des Abwickelns der Schlauchhülle 1 dreht, wie aus Fig. 2 zu ersehen ist. Zu Beginn des Abwickelns wird die zusammengefaltete Schlauchhülle 1 durch das erste Quetschwalzenpaar 2 hindurchgeführt, das aus zwei Walzen bzw. Rollen besteht, die entsprechend den Pfeilrichtungen in Fig. 2 gegeneinander gedrückt werden. Nachdem eine vorgegebene Länge der Schlauchhülle 1 durch das erste Quetschwalzenpaar 2 hindurchgelaufen ist, wird dieser Abschnitt der Schlauchhülle 1 mit einem Gas, insbesondere mit Luft mit einem entsprechenden Überdruck aufgefüllt und das offene Ende der Schlauchhülle 1 beispielsweise durch einen Clip verschlossen. In der Schlauchhülle 1 befindet sich dann eine Gasblase 18, die sich über die Länge der Einlaufstrecke von dem ersten Quetschwalzenpaar 2 bis zu dem mit einem Clip verschlossenen Ende der Schlauchhülle 1 erstreckt. Die Schlauchhülle 1 wird dann in das Kranzwerkzeug eingeführt. Die aufgeblasene Schlauchhülle 1 durchläuft das Kranzwerkzeug und wird in diesem zu einer Kranzhülle 16 geformt, wie nachstehend noch näher beschrieben werden wird. Der Druck der Gasblase 18 kann durch Verfahren des ersten Quetschwalzenpaares entlang der Einlaufstrecke A verändert werden, da die in der Schlauchhülle 1 eingeschlossene Gasmenge je nach der Stellung des Quetschwalzenpaares 2 auf einen längeren oder kürzeren Schlauchhüllenabschnitt verteilt wird. Die Kranzhülle 16 bewegt sich durch eine Auslaufstrecke B, die parallel zu der Einlaufstrecke A ist und durchläuft das zweite Quetschwalzenpaar 15, das ortsfest angeordnet ist. Die Gasblase 18 ist somit in der Schlauchhülle 1 bzw. in der Kranzhülle 16 zwischen dem ersten und dem zweiten Quetschwalzenpaar 2 bzw. 15 eingeschlossen. Durch das Abquetschen der vorgegebenen Gasmenge bzw. Luftmenge durch das zweite Quetschwalzenpaar 15 ist sichergestellt, daß stets ein ausreichender Gasüberdruck für den Kranzvorgang aufrechterhalten bleibt. Durch diese Verfahrensweise wird die Gasmenge nicht mehr in kleinen Kranzeinheiten abgeführt, wie dies bei den bekannten Verfahren der Fall ist, die es erforderlich machen, stets neues Gas in die Schlauchhülle einzublasen. Die Gasblase 18 bzw. das Gaspolster bleibt also während des Kranzens zwischen den beiden Quetschwalzenpaaren 2 und 15 komplett über die gesamte Länge der Schlauch- bzw. der Kranzhülle erhalten. Beim Durchgang der Kranzhülle 16 durch das zweite Quetschwalzenpaar 15 wird die Kranzhülle 16 flach zusammengedrückt und kann dann problemlose auf die Aufwickelrolle 21 aufgewickelt werden, um anschließend durch bekannte Rafftechniken weiterverarbeitet zu werden. In Fig. 3 ist schematisch das Kranzwerkzeug 3 gezeigt, das als eine Wendel 19 ausgebildet ist. Entlang der Wendel 19 sind Führungsrollen bzw. -röllchen 7 und 8 angeordnet. Die Wendel 19 erstreckt sich beispielsweise über einen Dreiviertelumfang des Kranzwerkzeuges 3. An einer Außenseite der aufgeblasenen Schlauchhülle 1 liegen die Führungsrollen 7 an, während eine Innenseite 6 der Schlauchhülle von den Führungsrollen 8 tangiert wird. Im Inneren der Wendel 19 befindet sich eine Einrichtung 4, bei der es sich beispielsweise um ein Heißluftgebläse oder einen Wärmestrahler handelt, von dem radial Wärme in Richtung der Innenseite 6 der Schlauchhülle 1 abgegeben wird. Die auf die Innenseite 6 auftreffende Wärme führt zu einem Schrumpfen der Schlauchhülle 1 auf der Innenseite 6, so daß die zu Beginn geradlinige Schlauchhülle 1 sich wendel-, spiral- bzw. ringförmig krümmt, wobei die Außenseite 5 der Schlauchhülle weniger stark als die Innenseite 6 erwärmt wird. Zumindest zwei Paare von Führungsrollen 7 und 8, wobei sich diese Führungsrollen jeweils diametral gegenüberliegen, sind angetrieben. Dabei laufen die an der Außenseite 5 der Schlauchhülle 1 anliegenden und angetriebenen beiden Führungsrollen 7 mit höherer Geschwindigkeit um als die an der Innenseite 6 der Schlauchhülle 1 anliegenden beiden Führungsrollen 8. Die Anzahl der Führungsrollen 7 an der Außenseite 5 der Schlauchhülle 1 ist im allgemeinen größer als die Anzahl an der Innenseite 6. Das erste Paar von angetriebenen Führungsrollen 7 und 8 befindet sich am Beginn der Wendelstrecke im Kranzwerkzeug 3, während das zweite Paar von angetriebenen Führungsrollen 7 und 8 dem ersten Paar auf dem halben Wendelumfang gegenüberliegt und, wie aus Fig. 4 ersichtlich ist, ein horizontaler Versatz V zwischen den Mittellinien der beiden Paare von Führungsrollen vorhanden ist.

Wie aus Fig. 4 zu ersehen ist, umgibt das Kranzwerkzeug 3 ein Gehäuse 14, das als Heißlufttunnel die Führungsrollen 7 an der Außenseite 5 der Schlauchhülle 1 umschließt. Die von der Einrichtung 4 abgegebene Konvektions- bzw. Strahlungswärme erwärmt die Schlauchhülle 1, die entlang der Wendel 19 geführt ist, wobei die für die Erwärmung der Innenseite 6 der Schlauchhülle 1 herangeführte Heißluft gleichmäßig über den Umfang der Schlauchhülle verteilt wird. Diese Heißluft wird in dem Heißlufttunnel gehalten, so daß sich eine vorgegebene Temperaturverteilung rings um die Schlauchhülle 1 herum einstellt, bei der die Innenseite 6 stärker als die Außenseite 5 der Schlauchhülle 1 erwärmt wird. Der Gasüberdruck in der Schlauchhülle 1 vor dem Einlaufen in das Kranzwerkzeug 3 kann durch Verkürzung oder Verlängerung des mit Gas gefüllten Schlauchhüllen- bzw. Kranzhüllenabschnittes zwischen den beiden Quetschwalzenpaaren 2 und 15 eingestellt werden. Die Länge dieses Abschnittes wird durch Verfahren des ersten Quetschwalzenpaares 2 entlang der Einlaufstrecke A verändert. Die Gasblase 18 in der Kranzhülle 16 wird vor deren Aufwickelung auf die Aufwickelrolle 21 abgequetscht, so daß das in dem Abschnitt der Kranzhülle 16 bzw. der Schlauchhülle 1 zwischen den beiden Quetschwalzenpaaren 2 und 15 vorhandene Gas eingeschlossen bleibt. Aus der nach dem Passieren des zweiten Quetschwalzenpaares 15 weiterlaufenden Kranzhülle 16 wird das Gas herausgequetscht und die weiterlaufende Kranzhülle wird entlang ihrer Kranzmittellinie flachgelegt und aufgewikkelt.

Wie aus Fig. 4 ersichtlich ist, sind die Führungsrollen 7 und 8 gekehlt und weisen schräg verlaufende Innenflanken 9 bzw. 10 auf. Sowohl die Führungsrollen 7 als auch die Führungsrollen 8 besitzen jeweils einen Außendurchmesser D und einen Innendurchmesser d, wobei die Innendurchmesser d und die Außendurchmesser D der Führungsrollen 7 und 8 jeweils gleichgroß sind. In einer nicht gezeigten, weiteren Ausführungsform können die Führungsrollen 7 an der Außenseite 5 der Schlauchhülle 1 größere Außendurchmesser D haben als die Führungsrollen 8 an der Innenseite 6 der Schlauchhülle 1. Der Mittenabstand R zwischen zwei Führungsrollen 7 und 8 eines angetriebenen Rollenpaares legt ein Kranzkaliber 11 der Kranzhülle 16 (vergleiche Fig. 5) fest. Die schrägen Innenflanken 9 bzw. 10 schließen an je eine Innenumfangsfläche 22 der Führungsrolle 7 bzw. eine Innenumfangsfläche 23 der Führungsrolle 8 an. Der Mittenabstand R ist gleich dem Abstand zwischen den Mitten der Innenumfangsflächen 22 und 23 der beiden Führungsrollen 7 und 8.

Fig. 5 zeigt eine Draufsicht auf die Kranzhülle 16, die das Kranzkaliber 11 hat, das wie voranstehend ausgeführt ist, durch den Abstand zwischen den Führungsrollen 7 und 8 der beiden angetriebenen Rollenpaare festgelegt ist. Ein Kranzinnendurchmesser 13 wird durch die Führungsrollen 8 an der Innenseite 6 der Schlauchhülle 1 bzw. durch den Krümmungsinnenradius der Wendel 19 festgelegt, während ein Kranzaußendurchmesser 12 durch die Führungsrollen 7 an der Außenseite 5 der Schlauchhülle 1 bzw. durch den Außendurchmesser der Wendel vorgegeben ist. Das Kranzkaliber beträgt beispielsweise 20 - 70 mm und der Kranzinnendurchmesser 13 liegt im Bereich von 30 - 300 mm.

## Patentansprüche

1. Verfahren zum kontinuierlichen Kranzen von thermoplastischen, schrumpffähigen Schlauchhüllen durch Wärmebehandlung der Innenseite einer wendelförmig geführten Schlauchhülle in aufgeblasenem Zustand, wobei die Schlauchhülle abschnittsweise vor dem Einlaufen in ein Kranzwerkzeug mit Druckgas von geringem Überdruck gefüllt wird, **dadurch gekennzeichnet, daß** die Schlauchhülle über einen Großteil des Umfanges einer Wendel geführt, erwärmt und auf ihrem Transportweg entlang der Wendel auf der Innen- und Außenseite mit unterschiedlichen Geschwindigkeiten angetrieben und dadurch gekranzt wird und daß die für die Erwärmung der Innenseite der Schlauchhülle herangeführte Heißluft gleichmäßig über den Umfang der Schlauchhülle verteilt und eine vorgegebene Temperaturverteilung um die Schlauchhülle herum aufrechterhalten wird.

2. Verfahren nach Anspruch 1, **dadurch gekennzeichnet, daß** die Schlauchhülle auf einem Dreiviertelumfang der Wendel zu einer Kranzhülle geformt wird und daß durch die Führung der Schlauchhülle entlang der Wendel die Geometrie der Kranzhülle in bezug auf Kranzinnen- und -außendurchmesser sowie Kranzkaliber vorgegeben wird.

3. Verfahren nach Anspruch 2, **dadurch gekennzeichnet, daß** das Kranzkaliber von 20 - 70 mm und der Kranzinnendurchmesser von 30 - 300 mm gewählt werden.

4. Verfahren nach Anspruch 1, **dadurch gekennzeichnet, daß** der Gasüberdruck in der Schlauchhülle vor dem Einlaufen der Schlauchhülle in das Kranzwerkzeug durch Verkürzung oder Verlängerung eines aufgeblasenen Schlauchhüllenabschnittes einstellbar ist.

5. Verfahren nach Anspruch 1, **dadurch gekennzeichnet, daß** die Kranzhülle nach dem Austritt aus dem Kranzwerkzeug abgequetscht und das Druckgas aus der weiterlaufenden Kranzhülle herausgequetscht wird und in der aufgeblasenen Kranzhülle verbleibt und daß die Kranzhülle entlang ihrer Kranzmittellinie flachgelegt und aufgewickelt wird.

6. Vorrichtung zum kontinuierlichen Kranzen von thermoplastischen, schrumpffähigen Schlauchhüllen mit einem teilweise beheizbaren wendelförmigen Kranzwerkzeug, durch das die Schlauchhüllen geführt sind und mit je einem vor und nach dem Kranzwerkzeug angeordneten Quetschwalzenpaar, zwischen denen eine Gasblase in der Schlauchhülle eingeschlossen ist, **dadurch gekennzeichnet, daß** das erste Quetschwalzenpaar (2) entlang einer Einlaufstrecke (A) der Schlauchhülle (1) vor dem Kranzwerkzeug (3) verstellbar ist, daß das Kranzwerkzeug (3) wendelförmig ausgebildet ist und entlang einer Wendel (19) Führungsrollen (7,8) angeordnet sind, die an der Außen- und Innenseite (5,6) der aufgeblasenen Schlauchhülle (1) anliegen, daß zumindest zwei Paare von Führungsrollen (7,8) angetrieben sind und daß eine Einrichtung (4) innerhalb des Innenumfangs der Wendel (19) Heißluft erzeugt, die von der Innenseite (6) her die Schlauchhülle (1) erwärmt.

7. Vorrichtung nach Anspruch 6, **dadurch gekennzeichnet, daß** die an der Außenseite (5) der Schlauchhülle (1) angetriebenen Führungsrollen (7) mit höherer Geschwindigkeit umlaufen als die an der Innenseite (6) der Schlauchhülle (1) angetriebenen Führungsrollen (8).

8. Vorrichtung nach Anspruch 6, **dadurch gekennzeichnet, daß** die Anzahl der Führungsrollen (7) an der Außenseite (5) der Schlauchhülle (1) größer als an der Innenseite (6) ist.

9. Vorrichtung nach Anspruch 6, **dadurch gekennzeichnet, daß** das erste Paar von angetriebenen Führungsrollen (7,8) am Beginn der Wendelstrecke im Kranzwerkzeug (3) angeordnet ist und daß das zweite Paar von angetriebenen Führungsrollen (7,8) dem ersten Paar von Führungsrollen (7,8) auf dem halben Wendelumfang mit horizontalem Versatz (V) gegenüberliegt.

10. Vorrichtung nach Anspruch 6, **dadurch gekennzeichnet, daß** die Führungsrollen (7,8) an der Außen- und Innenseite der Schlauchhülle (1) gleichgroße Innenund Außendurchmesser (d,D) haben.

11. Vorrichtung nach Anspruch 6, **dadurch gekennzeichnet, daß** die Führungsrollen (7) an der Außenseite (5) der Schlauchhülle (1) größere Außendurchmesser (D) als die Führungsrollen (8) an der Innenseite (6) der Schlauchhülle (1) aufweisen.

12. Vorrichtung nach Anspruch 6, **dadurch gekennzeichnet, daß** die Führungsrollen (7,8) gekehlt sind und mit schrägen Innenflanken (9,10) ihrer Kehlen die Schlauchhülle (1) tangieren.

13. Vorrichtung nach Anspruch 6, **dadurch gekennzeichnet, daß** ein Mittenabstand (R) der beiden Führungsrollen (7,8) eines angetriebenen Rollenpaares ein Kranzkaliber (11) einer Kranzhülle (16) vorgibt und daß die Führungsrollen (8) an der Innenseite (6) der Schlauchhülle (1) einen Kranzinnendurchmesser (13) und die Führungsrollen (7) an der Außenseite (5) der Schlauchhülle (1) einen Kranzaußendurchmesser (12) der Kranzhülle (16) festlegen.

14. Vorrichtung nach Anspruch 13, **dadurch gekennzeichnet, daß** das Kranzkaliber (11) 20- 70 mm und der Kranzinnendurchmesser (13) 30 - 300 mm betragen.

15. Vorrichtung nach Anspruch 6, **dadurch gekennzeichnet, daß** die Einrichtung (4) ein Heißluftgebläse oder ein Wärmestrahler ist.

16. Vorrichtung nach Anspruch 6, **dadurch gekennzeichnet, daß** das Kranzwerkzeug (3) ein Gehäuse (14) aufweist, das als Heißlufttunnel die Führungsrollen (7) an der Außenseite (5) der Schlauchhülle (1) umschließt.

17. Vorrichtung nach Anspruch 6, **dadurch gekennzeichnet, daß** in der Auslaufstrecke (B) der Kranzhülle (16) nach dem Kranzwerkzeug (3) das zweite Quetschwalzenpaar (15) angeordnet ist, das die Gasblase (18) in der Kranzhülle vor deren Aufwickelung auf eine Aufwickelrolle (21) abquetscht, so daß das in dem Abschnitt der Kranzhülle (16) bzw. Schlauchhülle (1) vorhandene Gas zwischen den beiden Quetschwalzenpaaren (2,15) eingeschlossen bleibt.

## Claims

1. A process for continuously forming rings of thermoplastic, shrinkable tubular casings by heat treatment of the inner side of a spiraled tubular casing in the inflated state, the tubular casing being filled with compressed gas of low gauge pressure section by section before running into a ring-forming tool, wherein the tubular casing is passed to a spiral over a large part of the circumference, heated and driven at different speeds on the inner side and outer side on its transporting path along the spiral and thereby formed into a ring and wherein the hot air applied for the heating of the inner side of the tubular casing is distributed uniformly over the circumference of the tubular casing and a predetermined temperature distribution around the tubular casing is maintained.

2. The process as claimed in claim 1, wherein the tubular casing is shaped into a ring casing on three quarters of the circumference of the spiral and the geometry of the ring casing in respect of the internal and external diameters of the ring and the caliber of the ring is predetermined by the guidance of the tubular casing along the spiral.

3. The process as claimed in claim 2, wherein the caliber of the ring is chosen to be from 20 - 70 mm and the internal ring diameter is chosen to be from 30 - 300 mm.

4. The process as claimed in claim 1, wherein the gauge pressure of the gas in the tubular casing can be set before the tubular casing runs into the ring-forming tool, by shortening or lengthening an inflated section of the tubular casing.

5. The process as claimed in claim 1, wherein the tubular casing is pinched off after leaving the ring-forming tool and the compressed gas is squeezed out of the continuing ring casing and remains in the inflated ring casing, and wherein the ring casing is laid flat along its center line of the ring and wound up.

6. An apparatus for continuously forming rings of thermoplastic, shrinkable tubular casings with a partially heatable spiraled ring-forming tool, through which the tubular casings are passed, and with a pair of pinch rolls respectively arranged upstream and downstream of the ring-forming tool, between which pairs of rolls a gas bubble is trapped in the tubular casing, wherein the first pair of pinch rolls (2) is adjustable along a running-in zone (A) of the tubular casing (1) before the ring-forming tool (3), wherein the ring-forming tool (3) is of a spiral design and guide rollers (7, 8) which bear against the outer and inner sides (5, 6) of the inflated tubular casing (1) are arranged along a spiral (19), wherein at least two pairs of guide rollers (7, 8) are driven and wherein a means (4) within the inner circumference of the spiral (19) generates hot air which heats the tubular casing (1) from the inner side (6).

7. The apparatus as claimed in claim 6, wherein the guide rollers (7) driven on the outer side (5) of the tubular casing (1) rotate at a higher speed than the guide rollers (8) driven on the inner side (6) of the tubular casing (1).

8. The apparatus as claimed in claim 6, wherein the number of guide rollers (7) on the outer side (5) of the tubular casing (1) is greater than on the inner side (6).

9. The apparatus as claimed in claim 6, wherein the first pair of driven guide rollers (7, 8) is arranged at the beginning of the spiral zone in the ring-forming tool (3) and wherein the second pair of driven guide rollers (7, 8) lie opposite the first pair of guide rollers (7, 8) halfway around the circumference of the spiral with a horizontal offset (V).

10. The apparatus as claimed in claim 6, wherein the guide rollers (7, 8) on the outer and inner sides of the tubular casing (1) have equal internal and external diameters (d, D).

11. The apparatus as claimed in claim 6, wherein the guide rollers (7) on the outer side (5) of the tubular casing (1) have a greater external diameter (D) than the guide rollers (8) on the inner side (6) of the tubular casing (1).

12. The apparatus as claimed in claim 6, wherein the guide rollers (7, 8) are recessed and tangentially contact the tubular casing (1) with sloping inner flanks (9, 10) of their recesses.

13. The apparatus as claimed in claim 6, wherein a center-to-center distance (R) between the two guide rollers (7, 8) of a pair of driven rollers predetermines a ring caliber (11) of the ring casing (16) and wherein the guide rollers (8) on the inner side (6) ofthe tubular casing (1) establish an internal ring diameter (13) and the guide rollers (7) on the outer side (5) of the tubular casing (1) establish an external ring diameter (12) of the ring casing (16).

14. The apparatus as claimed in claim 13, wherein the caliber (11) of the ring is 20 - 70 mm and the internal ring diameter (13) is 30 - 300 mm.

15. The apparatus as claimed in claim 6, wherein the means (4) is a hot-air blower or a radiant heater.

16. The apparatus as claimed in claim 6, wherein the ring-forming tool (3) has a housing (14), which, as a hot-air tunnel, encloses the guide rollers (7) on the outer side (5) of the tubular casing (1).

17. The apparatus as claimed in claim 6, wherein there is arranged in the running-out zone (B) of the ring casing (16) after the ring-forming tool (3) the second pair of pinch rolls (15), which pinches off the gas bubble (18) in the ring casing before the latter is wound onto the winding-up roller (21), with the result that the gas present in the section of the ring casing (16), or the tubular casing (1), remains trapped between the two pairs of pinch rolls (2, 15).

## Revendications

1. Procédé pour le cintrage continu de gaines de tuyau rétractables, thermoplastiques, par traitement thermique du côté intérieur d'une gaine de tuyau guidée en forme d'hélice ou serpentin, à l'état gonflé, la gaine de tuyau étant remplie par tronçons, avant l'introduction dans un outil de cintrage, par du gaz sous pression placé à une faible surpression, **caractérisé en ce que** la gaine de tuyau est guidée sur une grande partie de la périphérie d'une hélice, est chauffée et, sur son chemin de transport le long de l'hélice, est entraînée à des vitesses différentes, sur le côté intérieur et le côté extérieur et, de ce fait, est soumise à un processus de cintrage, et **en ce que**, l'air chaud amené, pour le chauffage, au côté intérieur de la gaine de tuyau, est réparti régulièrement sur la périphérie de la gaine de tuyau et une distribution prédéterminée des températures autour de la gaine de tuyau étant entretenue.

2. Procédé selon la revendication 1, **caractérisé en ce que** la gaine de tuyau est formée en une gaine en couronne sur les trois quarts de la circonférence de l'hélice, et **en ce que**, par le guidage de la gaine de tuyau le long de l'hélice, la géométrie de la gaine de couronne est prédéterminée eu égard aux diamètres intérieur et extérieur de la couronne, ainsi que du calibre de la couronne.

3. Procédé selon la revendication 2, **caractérisé en ce que** le calibre de couronne est choisi dans la fourchette de 20 à 70 mm, et le diamètre intérieur de couronne dans la fourchette de 20 à 300 mm.

4. Procédé selon la revendication 1, **caractérisé en ce que** la surpression de gaz régnant dans la gaine de tuyau, avant entrée de la gaine de tuyau dans l'outil de cintrage, est réglable par raccourcissement ou prolongement d'un tronçon de gaine de tuyau ayant été gonflé. .

5. Procédé selon la revendication 1, **caractérisé en ce que** la gaine de couronne est écrasée après la sortie de l'outil de cintrage, et le gaz sous pression, provenant de la continuation de l'alimentation en gaine de couronne, est isolé par écrasement et reste dans la gaine de couronne gonflée, et **en ce que** la gaine de couronne est aplatie le long de son axe de couronne et enroulée.

6. Dispositif pour le cintrage en continu de gaines de tuyau rétractables thermoplastiques, avec un outil de cintrage en forme d'hélice ou serpentin, partiellement chauffable, outil au moyen duquel les gaines de tuyau sont guidée, et avec fois une paire de rouleaux d'écrasement disposés en amont et en aval de l'outil de cintrage, paire de rouleaux d'écrasement entre lesquelles une bulle de gaz est incluse dans la gaine de tuyau, **caractérisé en ce que** la première paire de rouleaux d'écrasement (2) est réglable le long d'un parcours d'entrée (A) de la gaine de tuyau (1) en amont de l'outil de cintrage (3), **en ce que** l'outil de cintrage (3) est réalisé en forme d'hélice ou serpentin, et **en ce que**, le long d'une hélice (19), sont disposés des galets de guidage (7, 9) appuyant sur le côté extérieur et intérieur (5, 6) de la gaine de tuyau (1) gonflée, **en ce qu'**au moins deux paires de galets de guidage (7, 8) sont entraînés, et **en ce qu'**un dispositif (4) génère, à l'intérieur de la circonférence intérieure de l'hélice (12), de l'air chaud qui chauffe la gaine de tuyau (1), depuis le côté intérieur (6).

7. Dispositif selon la revendication 6, **caractérisé en ce que** les galets de guidage (7) entraînés sur le côté extérieur (7) de la gaine de tuyau (1) tournent à une vitesse supérieure aux galets de guidage (8) entraînés sur le côté intérieur (6) de la gaine de tuyau (1).

8. Dispositif selon la revendication 6, **caractérisé en ce que** le nombre des galets de guidage (7) sur le côté extérieur (7) de la gaine de tuyau (1) est supérieur à celui que l'on a sur le côté intérieur (6).

9. Dispositif selon la revendication 6, **caractérisé en ce que** la première paire de galets de guidage (7, 8) entraînés est disposée au début du chemin d'enroulement en hélice dans l'outil de cintrage (3), et **en ce que** la deuxième paire de galets de guidage (7, 8) entraînés est placée à l'opposé de la première paire de galets de guidage (7, 8), sur la demi-circonférence d'hélice ou serpentin, avec un décalage horizontal (V).

10. Dispositif selon la revendication 6, **caractérisé en ce que** les galets de guidage (7, 8) ont des diamètres intérieur et extérieur (d, D) identiques sur le côté extérieur et intérieur de la gaine de tuyau (1).

11. Dispositif selon la revendication 6, **caractérisé en ce que** les galets de guidage (7), montés sur le côté extérieur (7) de la gaine de tuyau (1), présentent des diamètres extérieurs (D) supérieurs à ceux des galets de guidage (8) montés sur le côté intérieur (6) de la gaine de tuyau (1).

12. Dispositif selon la revendication 6, **caractérisé en ce que** les galets de guidage (7, 8) sont rainurés ou cannelés et entrent en tangence avec la gaine de tuyau (1) par des flancs intérieurs (9, 10) obliques de leur rainures ou cannelures.

13. Dispositif selon la revendication 6, **caractérisé en ce qu'**un entraxe (R), entre les deux galets de guidage (7, 8) d'une paire de galets entraînés, prédétermine le calibre de couronne (11) d'une gaine de couronne (16), et **en ce que** les galets de guidage (8), installés sur le côté intérieur (6) de la gaine de tuyau (1), déterminent un diamètre intérieur de couronne ou serpentin (13), et les galets de guidage (7), installés du côté extérieur (5) de la gaine de tuyau (1), déterminent un diamètre extérieur de couronne ou serpentin (12) de la gaine de couronne (16).

14. Dispositif selon la revendication 13, **caractérisé en ce que** le calibre de couronne (11) est de 20 à 70 mm, et le diamètre intérieur de couronne (13) est de 30 à 300 mm.

15. Dispositif selon la revendication 6, **caractérisé en ce que** le dispositif (6) est une soufflante à air chaud ou un émetteur de chaleur par rayonnement.

16. Dispositif selon la revendication 6, **caractérisé en ce que** l'outil de cintrage (3) présente un carter (14) entourant, en tant que tunnel à air chaud, les galets de guidage (7) situés du côté extérieur (5) de la gaine de tuyau (1).

17. Dispositif selon la revendication 6, **caractérisé en ce que**, dans le parcours de sortie (B) de la gaine de couronne (16), en aval de l'outil de cintrage (3), est disposée la deuxième paire de rouleaux d'écrasement (15) qui isole par écrasement la bulle de gaz (18) située dans la gaine de couronne avant son enroulement sur un cylindre d'enroulement (21), de sorte que le gaz, présent dans le tronçon de la gaine de couronne (16) ou de la gaine de tuyau (1), reste enclos entre les deux paires de rouleaux d'écrasement (2, 15).
